# EUROPEAN PATENT SPECIFICATION

(11) **EP 4 185 394 B1**
(45) Date of publication and mention of the grant of the patent: **20.08.2025**
(21) Application number: 21846418.8
(22) Date of filing: 13.07.2021
(51) Int. Cl.: A63H 33/10

(54) **SET OF PLAY BLOCKS**
SPIELBLOCKSATZ
ENSEMBLE DE BLOCS DE JEU

(30) Priority: 23.07.2020 PL 43476320
(43) Date of publication of application: 31.05.2023
(73) Proprietor: Woobrick Sp. z o.o., 33-394 Chomranice (PL)
(72) Inventor: POCIECHA, Daniel, 33-394 Chomranice (PL); KWIATKOWSKI, Michal, 30-668 Kraków (PL); NOWOSIELSKI, Maciej, 30-619 Kraków (PL); KWIATKOWSKI, Maciej, 30-741 Kraków (PL); PRZYBYLA, Szymon, 43-520 Chybie (PL)
(74) Representative: Czarnik, Maciej
(86) International application number: PCT/PL2021/050053
(87) International publication number: WO 2022/019789

(56) References cited:
- EP-A2- 0 911 070
- WO-A1-2007/021090
- WO-A1-2018/061013
- PL-B1- 195 807
- PL-Y1- 62 227
- US-A1- 2012 210 546
- US-A1- 2012 210 546
- US-B1- 6 736 691

## Description

The subject of the invention is a set of play blocks.

Prior art solutions include sets of blocks manufactured from plastics designed to be joined by means of longitudinal elements with one end of the element recessed and jammed into one block and the other end - into another block.

In the Polish patent application PL 195807, a set of blocks is disclosed, comprising beam sections equipped with openings shaped as cylindrical tubes which extend transversely to the beam sections from the outer surface respectively to the inner surface. The openings are shaped in such a way that they can receive and latch the bushings included in the set of blocks. The bushings are tubular and provided with an outwardly extending flange forming an end bumper for the bushing, which can be slid into the opening at this distance. The outer end of the bushing is fitted with the corresponding, outwardly extending flange shaped as an elastic flange while the bushing is split in the longitudinal direction. The bushing may be pressed into the opening, with its outer end compressed, until it rests against the end bumper. In this position, the outer end reaches the other side of the opening and the outwardly extending flange is hooked behind the opening.

From the Patent Specification GB 2058590, there is known a set of building blocks as straight beams equipped with a certain number of openings extending from one side of the beam to the other, incorporating connecting pins, shaped as cylindrical tubes, while the lower surfaces of the beam sections are fitted with complementary connecting elements as outer rims and downwardly projecting cylindrical pivots inside them. Around the openings, on both sides of the beam sections, there are circular notches designed to provide space for the outwardly projecting flanges or bushings, which are also part of the set, and can also be used to connect the beam sections to each other or to connect them to other blocks in the set.

The patent application US20120210546 A1 describes a one-piece fastener designed to connect at least two objects and a tool for its removal. The fastener consists of a hollow cylindrical body with a through-hole along its length. One end features flexible locking legs with protrusions that snap into place when inserted through the objects' holes, ensuring a secure connection. A specially designed removal tool, equipped with a frame, release pin, and lever, allows easy detachment of the fastener. This design reduces the number of assembly components, simplifies installation, lowers production costs, and enhances ergonomics by enabling efficient removal, even for small fasteners.

A set of toy blocks is further known from WO2007/021090 A1.

Combinations of blocks called axles are known from the sets made by Lego, consisting of simple pins of various lengths with rounded ends and a Latin cross section with rounded edges, which are embedded frictionally in openings of matching cross-section, located in beam-shaped or other blocks.

These sets of blocks are manufactured from plastics and do not contain elements made of other materials, especially wood. The commercially available sets of wood blocks contain blocks made entirely of wood and are often painted, varnished, or impregnated. Materials of different kind, i.e. wood and plastic, can be joined thanks to the use of adhesives, for example. However, these connections are weak and unaesthetic. The use of adhesives increases the likelihood of emissions of harmful compounds in the toy and has a negative impact on the image of wooden blocks seen as "non-environmentally friendly." Moreover, it can make it difficult to classify and separate waste material from the blocks because the glued connection is durable. The subject of the invention is a connection making it possible to apply prior art solutions to connect blocks made predominantly of wood, with elements made of plastic serving as connecting elements or only supplements to the wooden part, i.e. reinforcing elements or finishing strips for edges or corners, for example, and making it possible to connect the blocks with blocks made of plastic. The connection does not require the use of adhesive. The plug connector clings to the socket of the block automatically after it has been placed in the working position. Moreover, the connection automatically increases its durability during the use of the set as it catches the tooth of the mounting protrusion against the shelf of the circumferential notch and forms, depending on the hardness of the wood, a groove acting as a plane of locking for the tooth of the mounting protrusion, thereby reducing the likelihood of the mounting protrusion slipping out of the circumferential notch and breaking the joint during subsequent use. Furthermore, the blocks can be easily recycled by, for example, reaming the plug connectors and removing the remnants, thereby completely separating the wood and the plastic from which the plug connector is made.

Each block of the set of play blocks has at least one flattened wall designed to contact a flattened wall of another block when joined; the flattened wall of each block has at least one mounting socket; the set also comprises at least one tubular plastic connecting element with each end fitting into the mounting socket and capable of forming a detachable connection with the mounting socket, wherein a body of at least one block of the set is made of wood, preferably of oak or beech wood, or of plywood or MDF; and the flattened wall of the block has a cylindrical socket, created by milling with a square cutter, for example, with a circumferential notch at the bottom and a plug connector made of plastic, preferably of polyamide (PA) or acrylonitrile-butadiene-styrene terpolymer (ABS), press-fitted into the socket, with a cylindrical body of the plug connector with an outer diameter corresponding to the diameter of the socket and a hollow forming a mounting socket for inserting prior art longitudinal connecting elements and shaped appropriately for this purpose. That body of the plug connector has an expansion clamp with a mounting protrusion circumferentially located at the free end on the outer edge, comprising at least two expansion tongues separated by slots arranged axially for the plug connector to allow for deflection of the expansion tongues when the plug connector is embedded in the socket, extending over a certain distance from the free ends of the expansion tongues toward the body of the plug connector.

In a variant of the solution, the set of play blocks, according to the invention, has the inner wall of the tooth of the mounting protrusion remaining after spreading the plug connector in the socket of the block flush with the shelf of the circumferential recess or this inner wall of the tooth of the mounting protrusion may be deflected from the shelf of the circumferential recess by an angle of α ≤ 50°, preferably by an angle of 30°. In the latter case, the tooth of the mounting protrusion catches the shelf of the circumferential recess when the longitudinal connecting element is removed from the mounting socket, preventing pulling out of the plug connector from the mounting socket and causing, through compression, gradual formation of a groove in the shelf of the circumferential recess to ensure better catching of the tooth with each successive detachment of the block, depending on the hardness of the wood from which the body of the block is made.

In a variant of the solution, the outer walls of the expansion tongues of the plug connector are deflected outwards from the plug connector axis by an angle of β = 2° to increase the friction of the plug connector with the walls of the socket to make it more difficult to pull out and rotate it in the socket.

In a variant of the solution, the outer wall of the body of the plug connector has at least two opposite projections spaced according to a certain pitch, positioned axially for the body of the plug connector, each with a rounded face of approach to facilitate insertion of the plug connector into the socket, and the side walls of the socket have recesses matching the projections to prevent rotation of the plug connector in the socket during use of the set.

The object of the invention is shown in the drawing with the figures representing the following elements:

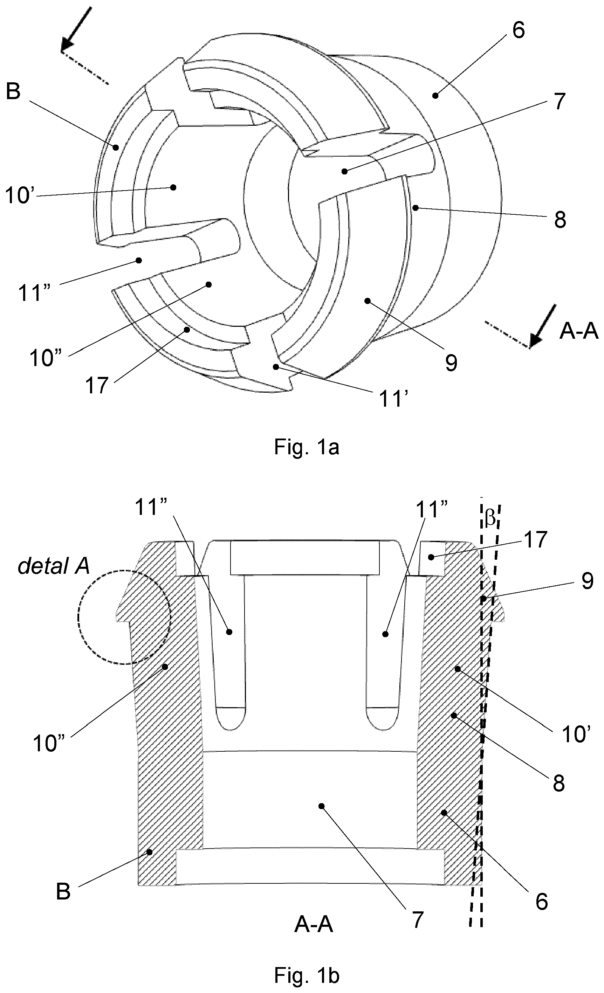

- Fig. 1a: Plug connector in axonometric view
- Fig. 1b: Longitudinal section A-A of the plug connector

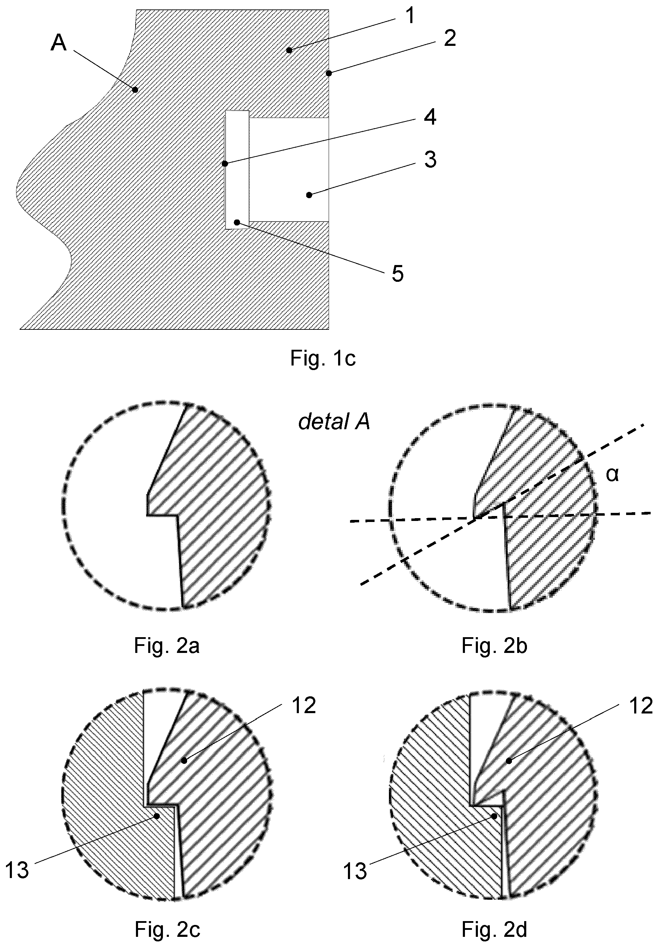

- Fig. 1c: Longitudinal section of a part of the block with the socket
- Fig. 2a: Detail A Fig. 1b of the drawing with the tooth of the mounting protrusion flush with the shelf of the circumferential recess
- Fig. 2b: Detail A Fig. 1b of the drawing with the tooth of the mounting protrusion deflected from the shelf of the circumferential recess by an angle of α = 30°
- Fig. 2c: Adherence of the tooth of the mounting protrusion flush with the shelf of the circumferential recess, as shown in Fig. 2a of the drawing, to the shelf of the circumferential recess
- Fig. 2d: Adherence of the tooth of the mounting protrusion flush with the shelf of the circumferential recess, as shown in Fig. 2a of the drawing, to the shelf of the circumferential recess

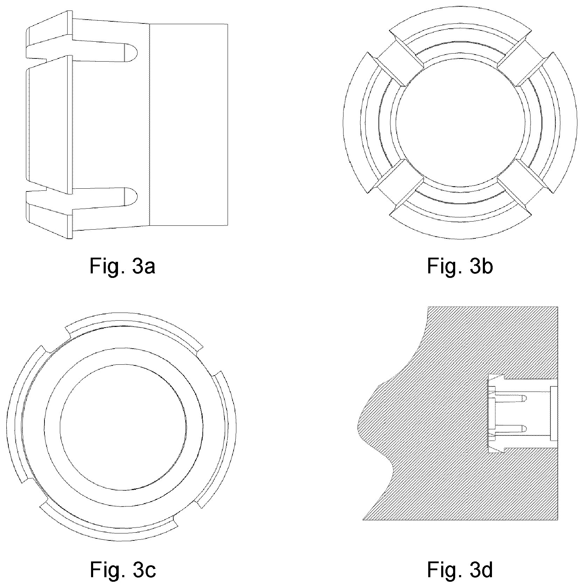

- Fig. 3a: Plug connector in side view
- Fig. 3b: Plug connector in front view
- Fig. 3c: Plug connector in rear view
- Fig. 3d: Longitudinal section of a part of the block with the socket and the plug connector inserted in it

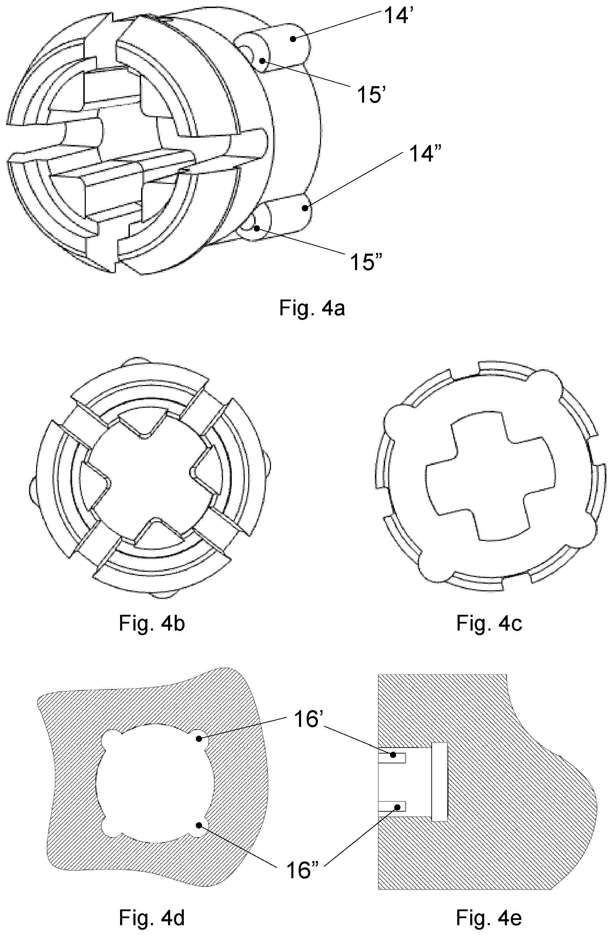

- Fig. 4a: Plug connector with projections in axonometric view
- Fig. 4b: Plug connector with projections in front view
- Fig. 4c: Plug connector with projections in rear view
- Fig. 4d: Cross section of a part of the block with the socket and recesses
- Fig. 4e: Longitudinal section of a part of the block with the socket and recesses

The embodiment of the solution according to the invention for the set of play blocks comprises multiple blocks, each with at least one flattened wall intended to be in contact with a flattened wall of another block when joined, and each with at least one mounting socket in the flattened wall, and multiple longitudinal plastic connecting elements constituting prior art tubular connecting elements with two pivots opposite each other, each with a circumferentially positioned fastening protrusion at the free end on the outer edge matching the circumferential recess 17 of the plug connector, each with two expansion tongues divided by axially positioned slots for the tubular element extending for a certain distance from the free ends of the expansion tongues toward the center of the tubular connecting element, and the length of the plug connector in the operating position and the depth of the socket are half the length of the tubular connecting element being able to form snap-on detachable connections with the suitably shaped mounting socket 7. Each block A of the set has a body 1 made of wood, and a cylindrical socket 3 in the flattened wall of the block 2, having circumferential notches 5 at the bottom 4 and the plastic plug connector B press-fitted in the socket 3 having a cylindrical body of the plug connector 6 with an outer diameter corresponding to the diameter of the socket 3 and a hollow forming a mounting socket 7, matching the said tubular connecting elements, and an expansion clamp 8 mounted on the body of the plug connector 6 with a mounting protrusion 9 circumferentially positioned at the free end on the outer edge, comprising at least four expansion tongues 10', 10" separated by slots 11', 11" positioned axially for the plug connector B, extending from the free ends of the expansion tongues 10', 10" toward the body of the plug connector 6, over a distance equal to half the length of the plug connector. The inner wall of the tooth 12 of the mounting protrusion 9 is flush with the shelf 13 of the circumferential notch 5 after the expansion of the plug connector B in the socket 3 of the block A. The outer walls of the expansion tongues 10', 10" are deflected outwards from the axis of the plug connector (B) by an angle of α = 2°.

Another embodiment of the solution according to the invention for the set of play blocks, similarly to the preceding embodiment, comprises multiple longitudinal connecting elements, so-called "axles," which can form detachable frictional connections with a suitably shaped mounting socket 7 m and the body of the plug connector 6 has four projections 14', 14" in opposite pairs arranged according to a fixed pitch placed axially for the body of the plug connector 6, each with a rounded wall of approach 15', 15", and the cylindrical socket 3 has recesses 16', 16" in the side walls matching the projections 14', 14".

## Claims

1. A set of play blocks, each with at least one flattened wall designed to contact to the flattened wall of another block when joined and at least one mounting socket (3) in the flattened wall and at least one tubular plastic connecting element with each end fitting into the mounting socket and capable of forming a detachable connection with it wherein at least one block (A) of the set has a body (1) made of wood, **characterised in that** said at least one block comprises a cylindrical socket (3) in the flattened wall of the block (2) with a circumferential recess notch (5) at the bottom (4) of said socket (3), and a plastic plug connector (B) press-fitted in the socket (3) having a cylindrical body (6) with an outer diameter corresponding to the diameter of the socket (3) and a hollow forming a mounting socket (7), matching said tubular plastic connecting element, and an expansion clamp (8) mounted on the body (6) of the plug connector (B) with a mounting protrusion (9) circumferentially positioned at a free end on the outer edge, and at least two expansion tongues (10', 10") separated by slots (11', 11") positioned axially, extending at a certain distance from the free ends of the expansion tongues (10', 10") toward the body (6) of the plug connector (B).

2. The set of play blocks according to claim 1, **characterized in that** the inner wall of the tooth (12) of the mounting protrusion (9) is flush with the shelf (13) of the circumferential notch (5) after the expansion of the plug connector (B) in the socket (3) of the block (A) or is deflected from it by an angle of α ≤ 50°.

3. The set of play blocks according to claim 1, **characterized in that** the outer walls of the expansion tongues (10', 10") are deflected outwards from the axis of the plug connector (B) by an angle of β = 2°.

4. The set of play blocks according to claim 1, **characterized in that** the body of the plug connector (6) has at least two opposite projections (14', 14") arranged according to a certain pitch, placed axially for the body of the plug connector (6), each with a rounded wall of approach (15', 15"), and the cylindrical socket (3) has recesses (16', 16") in the side walls matching the projections (14', 14").

## Patentansprüche

1. Ein Satz Spielbausteine, von denen jeder mindestens eine abgeflachte Wand aufweist, die so gestaltet ist, dass sie bei der Verbindung mit der abgeflachten Wand eines anderen Bausteins in Kontakt kommt, sowie mindestens eine Befestigungsaufnahme (3) in der abgeflachten Wand und mindestens ein röhrenförmiges Kunststoffverbindungselement, dessen jedes Ende in die Befestigungsaufnahme passt und mit dieser eine lösbare Verbindung bilden kann, wobei mindestens ein Baustein (A) des Satzes einen Körper (1) aus Holz aufweist, **dadurch gekennzeichnet, dass** der mindestens eine Block eine zylindrische Fassung (3) in der abgeflachten Wand des Blocks (2) mit einer umlaufenden Aussparung (5) am Boden (4) der Fassung (3) umfasst, und einen in die Fassung (3) eingepressten Kunststoff-Steckverbinder (B) mit einem zylindrischen Körper mit einem Außendurchmesser, der dem Durchmesser der Fassung (3) entspricht, und einer Ausnehmung, die eine Befestigungsfassung (7) bildet, die zu dem rohrförmigen Kunststoff-Verbindungselement passt, und einer Spreizklemme (8), die an dem Körper (6) des Steckverbinders (B) angebracht ist, mit einem Befestigungsvorsprung (9), der am freien Ende am Außenrand umlaufend angeordnet ist, und mindestens zwei Spreizzungen (10', 10"), die durch axial angeordnete Schlitze (11', 11") voneinander getrennt sind und sich in einem bestimmten Abstand von den freien Enden der Spreizzungen (10', 10") zum Körper (6) des Steckverbinders (B) erstrecken.

2. Der Satz von Spielblöcken gemäß Anspruch 1, **dadurch gekennzeichnet, dass** die Innenwand des Zahns (12) des Befestigungsvorsprungs (9) bündig mit der Ablage (13) der Umfangsnut (5) nach dem Aufspreizen des Steckverbinders (B) in der Buchse (3) des Blocks (A) bündig ist oder um einen Winkel von α ≤ 50° davon abweicht.

3. Spielblock-Set nach Anspruch 1, **dadurch gekennzeichnet, dass** die Außenwände der Spreizzungen (10', 10") um einen Winkel β = 2° von der Achse des Steckverbinders (B) nach außen abgelenkt sind.

4. Der Satz Spielblöcke gemäß Anspruch 1, **dadurch gekennzeichnet, dass** der Körper des Steckverbinders (6) mindestens zwei gegenüberliegende Vorsprünge (14', 14") aufweist, die in einem bestimmten Abstand angeordnet sind, axial zum Körper des Steckverbinders (6) platziert sind und jeweils eine abgerundete Annäherungswand (15', 15") aufweisen, und die zylindrische Buchse (3) in den Seitenwänden Aussparungen (16', 16") aufweist, die zu den Vorsprüngen (14', 14") passen.

## Revendications

1. Ensemble de blocs de jeu, chacun comportant au moins une paroi aplatie conçue pour entrer en contact avec la paroi aplatie d'un autre bloc lorsqu'ils sont assemblés, et au moins une douille de montage (3) dans la paroi aplatie, et au moins un élément de connexion tubulaire en plastique dont chaque extrémité s'insère dans la douille de montage et est capable de former une connexion amovible avec celle-ci, dans lequel au moins un bloc (A) de l'ensemble a un corps (1) en bois, **caractérisé en ce que** ledit au moins un bloc comprend une douille cylindrique (3) dans la paroi aplatie du bloc (2) avec une encoche circonférentielle (5) au fond (4) de ladite douille (3), et un connecteur à fiche en plastique (B) emboîté à force dans la douille (3) ayant un corps cylindrique avec un diamètre extérieur correspondant au diamètre de la douille (3) et un creux formant une douille de montage (7), correspondant audit élément de connexion tubulaire en plastique, et une pince d'expansion (8) montée sur le corps (6) du connecteur à fiche (B) avec une saillie de montage (9) positionnée circonférentiellement à une extrémité libre sur le bord extérieur et au moins deux languettes d'expansion (10', 10« ) séparées par des fentes (11', 11 ») positionnées axialement, s'étendant à une certaine distance des extrémités libres des languettes d'expansion (10', 10") vers le corps (6) du connecteur à fiche (B).

2. Ensemble de blocs de jeu selon la revendication 1, **caractérisé en ce que** la paroi intérieure de la dent (12) de la saillie de montage (9) affleure la tablette (13) de l'encoche circonférentielle (5) après l'expansion du connecteur à fiche (B) dans la prise (3) du bloc (A) ou est déviée de celle-ci d'un angle α ≤ 50°.

3. Ensemble de blocs de jeu selon la revendication 1, **caractérisé en ce que** les parois extérieures des languettes d'expansion (10', 10") sont déviées vers l'extérieur par rapport à l'axe du connecteur à fiche (B) d'un angle β = 2°.

4. Ensemble de blocs de jeu selon la revendication 1, **caractérisé en ce que** le corps du connecteur à fiche (6) comporte au moins deux saillies opposées (14', 14« ) disposées selon un certain pas, placées axialement par rapport au corps du connecteur à fiche (6), chacune avec une paroi d'approche arrondie (15', 15 »), et la prise cylindrique (3) comporte des évidements (16', 16« ) dans les parois latérales correspondant aux saillies (14', 14 »).
